# EUROPEAN PATENT APPLICATION

(11) **EP 1 365 330 A1**
(43) Date of publication of application: **26.11.2003**
(21) Application number: 02700777.2
(22) Date of filing: 26.02.2002
(51) Int. Cl.: G06F 17/30, G06F 3/00

(54) **INFORMATION PROVIDING DEVICE, INFORMATION PROCESSING DEVICE, INFORMATION PROVIDING METHOD, INFORMATION PROCESSING METHOD, PROGRAM, AND ITS RECORDED MEDIUM**

(30) Priority: 28.02.2001 JP 2001054386; 20.02.2002 JP 2002043434
(71) Applicant: Sony Computer Entertainment Inc., Tokyo 107-0052 (JP)
(72) Inventor: OHBA, Akio c/o Sony Computer Entertainment Inc., Tokyo 107-0052 (JP); CHATANI, Masayuki Sony Computer Entertain. Inc., Tokyo 107-0052 (JP)
(74) Representative: Manitz, Finsterwald & Partner GbR
(86) International application number: JP0201704
(87) International publication number: WO02069191

(57) **Abstract**

A system for helping people find information on a subject of their interest from vast information sources available on a network is provided.

An information presentation system is connected to a user terminal through a network to provide a program schedule to the user terminal. The program schedule represents an on-tour program that allows a user to access web sites during which a character explains about the web sites to the user. The information presentation system includes tour history data storing means on which a tour history data item is stored, the tour history data item representing a web tour history, character data storing means on which a character data item including an image of the character is stored, screenplay data storing means on which a screenplay data item representing timing to access the associated web sites designated by the tour history data item, timing to display the image of the character, the type of comments of the character, and timing to display the comments of the character is stored, the and program schedule managing means adapted to supply to the user terminal the tour history data item, the character data item, and the screenplay data item forming the program schedule, in response to a request from the user terminal.

## Description

### Technical Field

The present invention relates to a system for helping people find information on a subject of their interest from vast information sources available on a network, particularly on the Internet.

### Background Art

The rapid growth of the Internet has resulted in an increasing number of World-Wide Web (WWW) sites (hereinafter, also referred to as "web sites") around the world and, it is almost impossible to track the exact number of the existing web sites. The Internet is becoming a treasure-house of information that allows users to share the information anytime from anywhere. As a result of this explosive growth, however, the users have too many choices for what they receive. It often takes a lot of time and effort for the users to filter out useful information that suits their taste.

With this respect, portal sites are developed as a doorway to the Internet mainly for the convenience of the users. Typical portals offer a search engine, links to handpicked web sites, the latest news headlines or other services. Some portals have a directory structure for navigation purposes. The directories may be helpful in certain cases especially when a user has a specific destination or target. The portals can, on the other hand, become a convoluted mess for those who just want to find a fascinating web site and enjoy their time, due to rather provider-unique directories and limited search features. Consequently, the users may end up being away from the portals and find themselves visiting their favorite web site(s). In fact, the users are often far from making full use of the Internet even though the Internet has a mass of useful information.

Therefore, an object of the present invention is to provide a system for producing a "Web show" or "Web program" that appeals to users, as a collection of some web pages of the existing web sites arranged in a particular order, and enabling automatic playback of the resulting Web program(s) on a user terminal.

Another object of the present invention is to provide a system for allowing users to have an enjoyable surfing experience on the Internet while getting a feel for a so-called charismatic person, such as a big name, media personality, professional, or even fictional character (hereinafter, collectively referred to as a "charismatic character") who serves as a guide to show the users around his or her favorite or recommended web sites.

### Disclosure of Invention

An information presentation system according to the present invention that solves the above-mentioned problems is an information presentation system connected to a user terminal through a network to provide a program schedule to the user terminal, the program schedule representing an on-tour program that introduces a user web sites, comprising: tour history data storing means on which a tour history data item is stored, the tour history data item representing a web tour history; screenplay data storing means on which a screenplay data item is stored, the screenplay data item representing timing to access the associated web sites designated by the tour history data item, the type of comments about the web sites, and timing to display the comments about the web sites; and program schedule managing means adapted to supply to the user terminal the tour history data item and the screenplay data item forming the program schedule, in response to a request from the user terminal.

Another information presentation system according to the present invention that solves the above-mentioned problems is an information presentation system connected to a user terminal through a network to provide a program schedule to the user terminal, the program schedule representing an on-tour program that allows a user to access web sites during which a character explains about the web sites to the user, comprising: tour history data storing means on which a tour history data item is stored, the tour history data item representing a web tour history; character data storing means on which a character data item is stored, the character data item including an image of the character; screenplay data storing means on which a screenplay data item is stored, the screenplay data item representing timing to access the associated web sites designated by the tour history data item, timing to display the image of the character, the type of comments of the character, and timing to display the comments of the character; and program schedule managing means adapted to supply to the user terminal the tour history data item, the character data item, and the screenplay data item forming the program schedule, in response to a request from the user terminal.

The above-mentioned another information presentation system may further comprise index data storage means on which program index data are stored, wherein the program schedule managing means supplies the program index data to the user terminal in response to a request from the user terminal.

An information processing system according to the present invention that solves the above-mentioned problems is an information processing system comprising: a communication controller adapted to receive a program schedule through a network, the program schedule having a tour history data item and a screenplay data item, the tour history data item representing a web tour history, the screenplay data item representing timing to access the associated web sites designated by the tour history data item, the type of comments about the web sites, and timing to display the comments about the web sites; program schedule decoder for decoding the program schedule received by said communication controller; and screen display controlling means for controlling the web browser to achieve automatic access to the web sites in accordance with the tour history data item and the screenplay data item, and controlling to display in chronological order the display window of the web browser and the comments about the web sites displayed by the web browser on a display device.

Another information processing system according to the present invention that solves the above-mentioned problems is: an information processing system comprising: a communication controller adapted to receive a program schedule through a network, the program schedule having a tour history data item representing a web tour history, a character data item including an image of the character, and a screenplay data item representing timing to access the associated web sites designated by the tour history data item, timing to display the image of the character, the type of comments of the character, and timing to display the comments of the character; program schedule decoder for decoding the program schedule received by said communication controller; and screen display controlling means for controlling the web browser to achieve automatic access to the web sites in accordance with the tour history data item and the screenplay data item, and displaying in chronological order the display window of the web browser, the image of the character, and the comments of the character about the web sites displayed by the web browser on a display device.

The above-mentioned another information processing system may further comprise web site storing means, wherein the program schedule decoder accesses beforehand all web sites designated by the tour history data item and stores the information about the web sites on the web site storing means.

A first method according to the present invention that solves the above-mentioned problems is a method for providing information to a user terminal connected via a network, the information provided being a program schedule representing an on-tour program introducing web sites, comprising the steps of: supplying a program schedule to the user terminal, the program schedule having a tour history data item and a screenplay data item, the tour history data item representing a web tour history, the screenplay data item representing timing to access the associated web sites designated by the tour history data item, the type of comments about the web sites, and timing to display the comments about the web sites; in the user terminal, decoding the program schedule; controlling a web browser to achieve automatic access to the web sites in accordance with the tour history data item and the screenplay data item, and controlling the user terminal to display in chronological order the display window of the web browser and the comments about the web sites displayed by the web browser.

A second method according to the present invention that solves the above-mentioned problems is a method for providing information to a user terminal connected via a network, the information provided being a program schedule representing an on-tour program that allows a user to access web sites during which a character explains about the web sites to the user, comprising the steps of: supplying a program schedule to the user terminal, the program schedule having a tour history data item representing a web tour history, a character data item including an image of the character, and a screenplay data item representing timing to access the associated web sites designated by the tour history data item, timing to display the image of the character, the type of comments of the character, and timing to display the comments of the character; in the user terminal, decoding the program schedule; controlling a web browser to achieve automatic access to the web sites in accordance with the tour history data item and the screenplay data item, and controlling the user terminal to display in chronological order the display window of the web browser, the image of the character, and the comments of the character about the web sites displayed by the web browser.

A third method according to the present invention that solves the above-mentioned problems is a method carried out in a system that provides a user with an on-tour program as a program schedule, the on-tour program allowing the user to access web sites during which the web sites are introduced to the user, the program schedule having a tour history data item and a screenplay data item, the tour history data item representing a web tour history, the screenplay data item representing timing to access the associated web sites designated by the tour history data item, the type of comments about the web sites, and timing to display the comments about the web sites, comprising the steps of: receiving the program schedule through the network; decoding the program schedule; controlling a web browser to achieve automatic access to the web sites in accordance with the tour history data item and the screenplay data item; and displaying in chronological order the display window of the web browser and the comments about the web sites displayed by the web browser.

A fourth method according to the present invention that solves the above-mentioned problems is a method carried out in a system that provides a user with an on-tour program as a program schedule, the on-tour program allowing the user to access web sites during which a character explains about the web sites to the user, the program schedule having a tour history data item representing a web tour history, a character data item including an image of the character, and a screenplay data item representing timing to access the associated web sites designated by the tour history data item, timing to display the image of the character, the type of comments of the character, and timing to display the comments of the character, comprising the steps of: receiving the program schedule through the network; decoding the program schedule; controlling a web browser to achieve automatic access to the web sites in accordance with the tour history data item and the screenplay data item; and displaying on a display device in chronological order the display window of the web browser, the image of the character, and the comments of the character about the web sites displayed by the web browser.

A first computer program according to the present invention that solves the above-mentioned problems is a computer program for use in making a computer carry out jobs, the computer is connected to a user terminal via a network, the computer being function to provide a program schedule to the user terminal, the program schedule representing an on-tour program introducing web sites, the computer program being for use in making the computer carry out the steps of: sending collectively a tour history data item and a screenplay data item as the program schedule, the tour history data item representing a web tour history, the screenplay data item representing timing to access the associated web sites designated by the tour history data item, the type of comments about the web sites, and timing to display the comments about the web sites; and directing the user terminal to decode the program schedule, to control a web browser to achieve automatic access to the web sites in accordance with the tour history data item and the screenplay data item and to display on a display device in chronological order the display window of the web browser and the comments about the web sites displayed by the web browser.

A second computer program according to the present invention that solves the above-mentioned problems is a computer program for use in making a computer carry out jobs, the computer is connected to a user terminal via a network, the computer being function to provide a program schedule to the user terminal, the program schedule representing an on-tour program that allows the user to access web sites during which a character explains about the web sites to the user, the computer program being for use in making the computer carry out the steps of: sending collectively, as the program schedule, a tour history data item representing a web tour history, a character data item including an image of the character, and a screenplay data item representing timing to access the associated web sites designated by the tour history data item, timing to display the image of the character, the type of comments of the character, and timing to display the comments of the character; and directing the user terminal to decode the program schedule, to control a web browser to achieve automatic access to the web sites in accordance with the tour history data item and the screenplay data item and to display on a display device in chronological order the display window of the web browser, the image of the character, and the comments of the character about the web sites displayed by the web browser.

A third computer program according to the present invention that solves the above-mentioned problems is a computer program for use in making a computer carry out jobs, the computer being function to provide a user with an on-tour program as a program schedule, the on-tour program introducing web sites, the program schedule having a tour history data item and a screenplay data item, the tour history data item representing a web tour history, the screenplay data item representing timing to access the associated web sites designated by the tour history data item, the type of comments about the web sites, and timing to display the comments about the web sites, the computer program being for use in making the computer carry out the steps of: receiving the program schedule via the network; decoding the program schedule; controlling the web browser to achieve automatic access to the web sites in accordance with the tour history data item and the screenplay data item; and displaying on a display device in chronological order the display window of the web browser and the comments about the web sites displayed by the web browser.

A fourth computer program according to the present invention that solves the above-mentioned problems is a computer program for use in making a computer carry out jobs, the computer being function to provide a user with an on-tour program as a program schedule, the on-tour program allowing the user to access web sites during which a character explains about the web sites to the user, the program schedule having a tour history data item representing a web tour history, a character data item including an image of the character, and a screenplay data item representing timing to access the associated web sites designated by the tour history data item, timing to display the image of the character, the type of comments of the character, and timing to display the comments of the character, the computer program being for use in making the computer carry out the steps of: receiving the program schedule through the network; decoding the program schedule; controlling the web browser to achieve automatic access to the web sites in accordance with the tour history data item and the screenplay data item; and displaying on a display device in chronological order the display window of the web browser, the image of the character, and the comments of the character about the web sites displayed by the web browser.

The above-mentioned computer programs may be stored on a computer-readable data storage.

The above and still further objects, features and advantages of the present invention will become apparent upon consideration of the following detailed description of a specific embodiment thereof, particularly when taken in conjunction with the accompanying drawings.

### Brief Description of Drawings

Fig. 1 is a schematic block diagram showing an entire configuration of a system according to an embodiment of the present invention;
Fig. 2 is a functional block diagram of an on-tour program provider;
Fig. 3 is a view showing an example of a program index data array 15;
Fig. 4 is a view showing an example of a tour history data item 12;
Fig. 5 is a view showing an example of a charismatic character data item 13;
Fig. 6 is a view showing an example of a screenplay data item 14;
Fig. 7 is a default top page of a web site of an on-tour program provider 10 according to an embodiment of the present invention;
Fig. 8 is a functional block diagram of a user terminal;
Fig. 9 is a view showing examples of a browser control sequence and an animation control sequence;
Fig. 10 is a flow chart illustrating a procedure to provide an on-tour program; and
Fig. 11 is a screen shot showing a quiz show achieved by using the on-tour program of the present invention.

### Best Mode for Carrying Out the Invention

An embodiment of the present invention is described in detail with reference to the drawings.

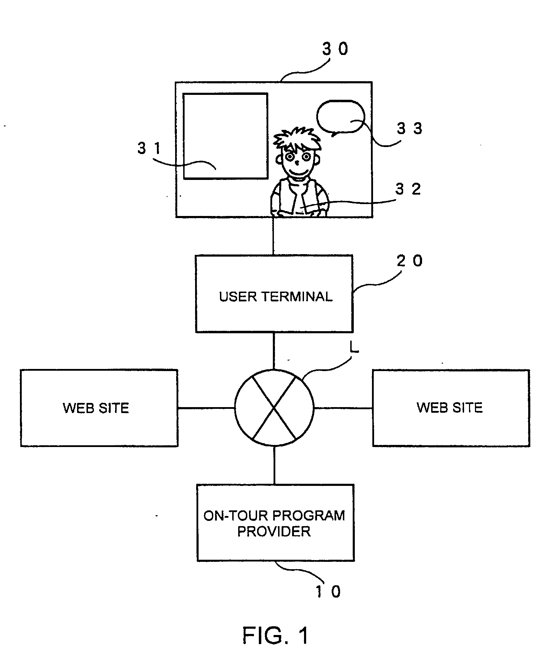

Fig. 1 is a schematic block diagram showing an entire configuration of a system according to an embodiment of the present invention. In this embodiment, an on-tour program provider 10 is connected to a user terminal 20 through a network L. The network L is typically the Internet consisting of a number of user terminals but may additionally include other internets and intranets as well.

The on-tour program provider 10 has program schedules that include web site guide programs available for users. The web site guide program (hereinafter referred to as an "on-tour program") allows the users to automatically access several web sites during which a charismatic character explains about the web sites to the user. A user receives a program schedule at the user terminal 20 through the network L and then accesses the web sites according to the program schedule. The on-tour program is displayed on a screen of a monitor 30.

As shown in Fig. 1, the images displayed on a screen of the monitor 30 are controlled by an operating system (OS) designed to control the user terminal 20, a typical web browser (e.g., Internet Explorer available from Microsoft Co.), and a software product of the present invention. The screen of the monitor 30 has a browser region 31, a character image 32, and a balloon region 33. The browser region 31 is used to display web pages. The character image 32 is an animation picture of the charismatic character. The balloon region 33 is where the words that the charismatic character is saying with respect to web pages are provided. During the service, the contents of the web sites specified by the program schedule appear on the browser region 31 and descriptions about the web sites appear on the balloon region 33. This allows the user to automatically visit the web sites of the charismatic character's choice even at the user terminal 20. In other words, the user can find the web sites that he or she doesn't know before and get a feel for the charismatic character explaining what the web sites are about. Thus, the on-tour program on the monitor 30 helps the user turn up web sites he or she wouldn't find otherwise. The on-tour program is play-backed on a screen of the monitor 30 by a web browser.

In Fig. 1, one on-tour program provider 10 and one user terminal 20 are illustrated. However, it should be understood that the on-tour program provider 10 and the user terminal 20 are not limited in number on the network L. The present invention may equally be applied to the network L connected to dozens, several hundred, several thousand, or even more on-tour program providers and/or user terminals. It should also be noted that WWW servers on which the web sites to be introduced by the charismatic character reside are also on the network L.

### <On-Tour Program Provider>

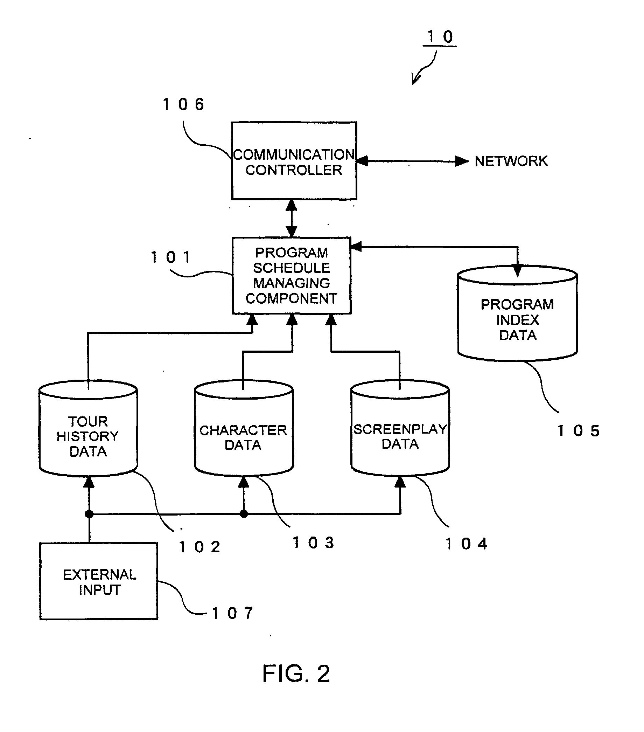

The on-tour program provider 10 is an information processing system (computer) which comprises a central processing unit (CPU), a memory, an input/output device, and a communication interface for communicating with the network L. The CPU on the on-tour program provider 10 loads a program or data from the memory to provide a functional feature as shown in a block diagram in Fig. 2.

More specifically, the on-tour program provider 10 comprises an program schedule managing component 101, a tour history data storage component 102 having tour history data items 12 stored thereon, a character data storage component 103 having charismatic character data items 13 stored thereon, a screenplay data storage component 104 having screenplay data items 14 stored thereon, a program index data storage component 105 having program index data arrays 15 stored thereon, a communication controller 106 that controls communications with the user terminal 20 through the network L, and an external input unit 107. The external input unit 107 is to be connected to an input device (not shown) such as a keyboard and a mouse.

The program schedule managing component 101 reads a program index data array 15 out of the program index data storage component 105. The program schedule managing component 101 retrieves the corresponding data items from the tour history data storage component 102, the character data storage component 103, and the screenplay data storage component 104 and arranges the retrieved data items as a single program schedule. In response to a request from the user terminal 20, the program schedule managing component 101 sends the program schedule in question to the requesting user terminal 20 through the communication controller 106.

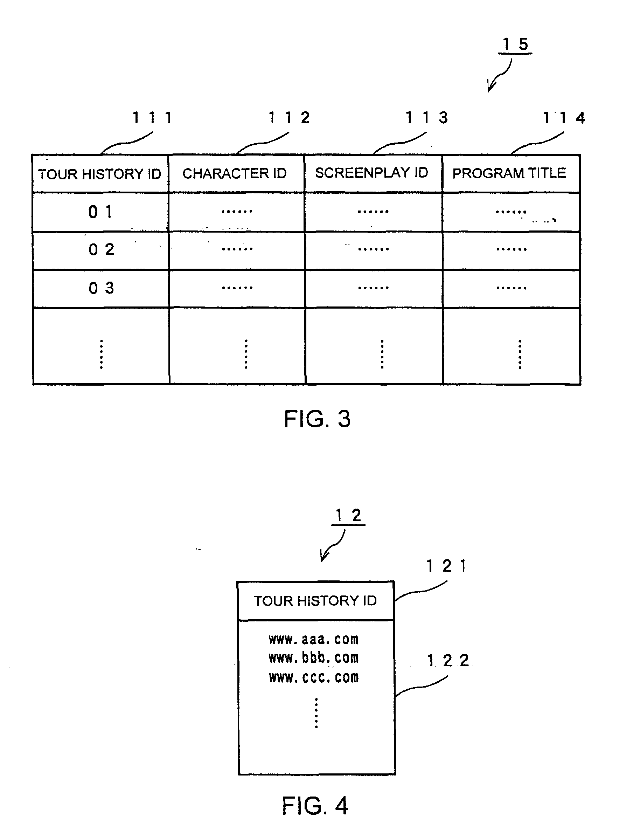

Now, the program index data array 15 is described. The program index data array 15 is formed of a plurality of records each of which associates the corresponding tour history data item 12, charismatic character data item 13, and screenplay data item 14 stored on the components 102 to 104, respectively, as a single on-tour program. Fig. 3 shows an example of records making up the program index data array 15. Each record of the program index data array 15 includes a tour history ID field 111, a character ID field 112, a screenplay ID field 113, and a program title field 114. The tour history ID field 111 is an area into which a tour history ID is entered for identifying the tour history data item 12. The character ID field 112 is an area into which a character ID is entered for identifying the charismatic character data item 13. The screenplay ID field is an area into which a screenplay ID is entered for identifying the screenplay data item 14. The program title field 114 contains a title of an on-tour program. The character ID field 112 may have two or more IDs depending on the type of the on-tour program, as will be described more in detail below.

The user terminal 20 loads the program title fields 114 from the program index data array 15 sent from the on-tour program provider 10 and shows a list of the programs on the screen of the monitor 30 to allow the user to choose a desired on-tour program from the list.

The user terminal 20 also loads a character image data item 133 along with the program title fields 114 from the program index data array 15, sent from the on-tour program provider 10. The character image data item 133 is used to show the character image on the screen of the monitor 30 together with the list of the program titles. The user may choose any of the character images appeared on the monitor 30.

The tour history data storage component 102 stores the tour history data items 12 for multiple characters. Each tour history data item 12 represents a web tour history for the charismatic character. For example, the tour history data item 12 includes Uniform Resource Locators (URLs) specifying the location of the web pages on the web site(s) the charismatic character has visited on a particular theme. Fig. 4 shows an example of the tour history data item 12. The tour history data item 12 includes a tour history ID 121 and a tour history 122 that is a list of the URLs. The tour history ID 121 is a unique identifier for each tour history.

The charismatic character may be a real-life person or a virtual-life person with an artificial personality. The term "charismatic character" as used herein means an individual whose personality and characteristics can be understood easily. For example, a real famous person (e.g., a famous beautician) or a professional (an art connoisseur), or an individual whose social position can be measured virtually (e.g., a housewife who lives in Kyoto and is a very good shopper).

When the charismatic character is created based on a real-life person, the person may be asked to perform web searches or netsurfing actually on the Internet to produce the tour history data item 12 using the search/netsurf histories. When the charismatic character is a virtual existence, the on-tour program provider 10 may prepare the tour history 122 after searching on the Internet or visiting several web sites on the assumption that the charismatic character should or must do so.

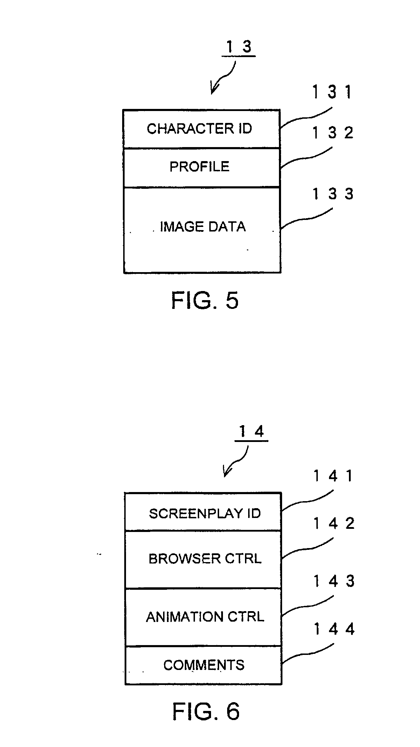

The character data storage component 103 stores the charismatic character data items 13 for multiple charismatic characters. The charismatic character data item 13 includes specific personal information such as a name of the charismatic character, and a character image data item indicative of the character image used for the on-tour program. Fig. 5 is a view showing an example of the charismatic character data item 13. The charismatic character data item 13 includes character ID 131 for identifying the charismatic character, a profile 132 of the charismatic character, and a character image data item 133 used for producing the character image 32. The character image represented by the image data item 133 as used herein is not limited to a specific image. Instead, it may be a photo, an animation picture, a portrait, or an illustration.

The screenplay data storage component 104 stores a plurality of screenplay data items 14. The screenplay data item 14 represents timing at which the associated web pages are displayed (or the associated web sites are accessed). The screenplay data item 14 also represents the character image(s) to be displayed, words of the charismatic character(s), and other image control information. The screenplay data item 14 is used to combine an on-tour history represented by the tour history data item 12 and the character image produced by the charismatic character data item 13 to produce a "Web show" or "Web program".

Fig. 6 is a view showing an example of the screenplay data item 14. The screenplay data item 14 comprises a screenplay ID 141, a browser control sequence 142, an animation control sequence 143, and comments 144. The screenplay ID 141 is a unique identifier for each screenplay. The browser control sequence 142 specifies startup of a browser as well as timing of access to each web pages. The animation control sequence 143 specifies information required for producing animation pictures and static images (i.e., information required to identify the charismatic character) as well as timing to display each picture/image in an area outside the browser on the display screen of the user terminal. The comments 144 are explanations about the web page currently in the active browser window. The comments 144 correspond to the words of the charismatic character on the monitor.

The communication controller 106 controls the communications with the user terminal 20 through the network L. In particular, the communication controller 106 receives a request from the user terminal 20, sends the request to the program schedule managing component 101, and transfers the program schedule received from the program schedule managing component 101 to the user terminal 20 through the network L. The external input unit 107 is connected to an input device (not shown) such as a keyboard or a touch tablet. The external input unit 107 is used to enter various data and information (including the tour history data item 12, the charismatic character data item 13, the screenplay data item 14 and the program index data array 15) to the tour history data storage component 102, the character data storage component 103, the screenplay data storage component 104, and the program schedule data storage component 105, according to an input supplied from the input device. The on-tour program provider 10 serves to display, on the screen of the monitor 30 of the user terminal 20, images according to the program index data array 15 stored on the program index data storage component 105 in response to the access from the user terminal 20 through the network L. The images displayed on the monitor 30 include those of buttons corresponding to the on-tour programs.

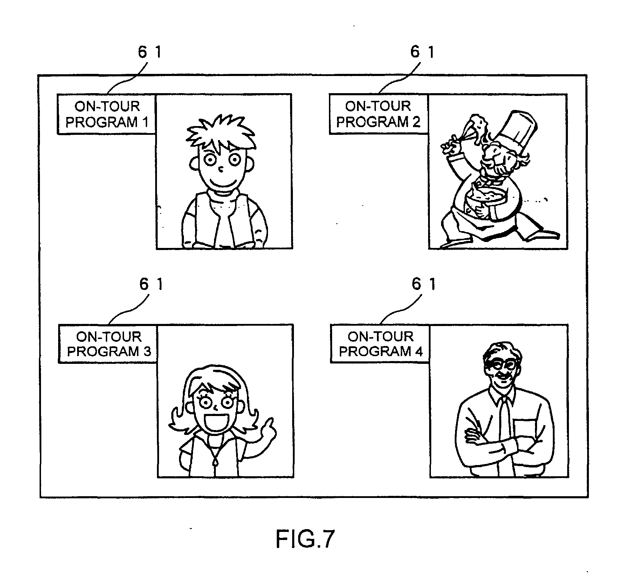

Fig. 7 is a view showing examples of the images and their associated buttons 61 which are displayed on the monitor 30 in accordance with the program index data array 15. When a user clicks on a button 61 with a pointing device such as a mouse, the event corresponding to the button is sent to the on-tour program provider 10. The program schedule for the button that the user chooses is then supplied from the on-tour program provider 10 to the user terminal 20. The screen for selecting buttons and transmission of information associated with the selected button can be controlled by using a web technique based on the Hyper Text Markup Language (HTML) and a web browser.

### <User Terminal>

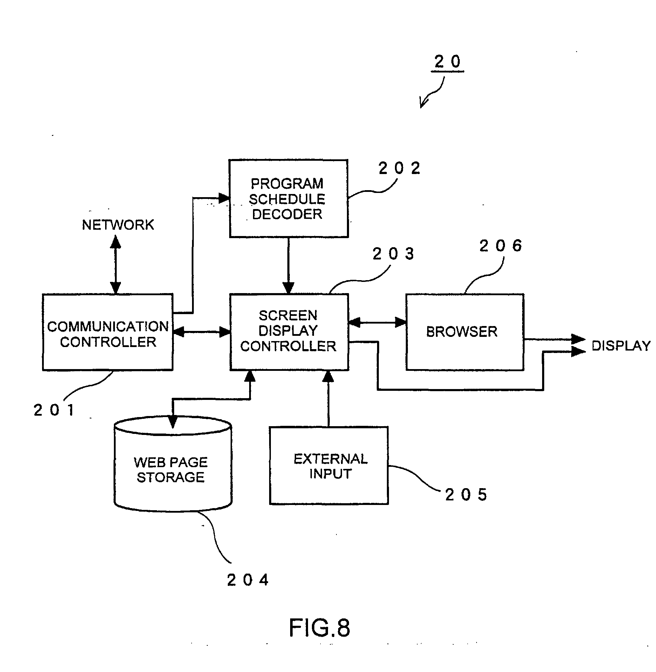

The user terminal 20 may be an information processing terminal such as a common personal computer. The user terminal 20 comprises, for example, a CPU, a memory, an input/output device, and a communication interface for communicating with the network L. The CPU loads a program and data out of the memory to achieve a functional block as shown in Fig. 8 in the user terminal 20.

The user terminal 20 comprises a communication controller 201, a program schedule decoder 202, screen display controller 203, a web page storage 204, an external input unit 205, and a browser 206. The communication controller 201 controls the communications with the on-tour program provider 10 through the network L. In particular, the communication controller 201 sends a request for a program schedule to the on-tour program provider 10 and receives the program schedule from the on-tour program provider 10. The communication controller 201 controls all accesses to the web sites other than the on-tour program provider 10 on the network L in response to a request from the browser 206. The program schedule decoder 202 loads and decodes the program schedule received from the communication controller 201. The screen display controller 203 controls the operation of the browser 206. More specifically, the screen display controller 203 controls: startup and termination of the browser; access to web pages through the browser 206 and loading of these web pages into the browser 206 according to the program schedule decoded by the program schedule decoder 202; access to web pages through the browser 206 and loading of these web pages into the browser 206 in response to an input from the external input unit 205; and display of information (e.g., the animation picture of the charismatic character and his or her comments) on the screen of the monitor 30 other than the information of the web sites. The web page storage 204 stores the web pages that have already been accessed.

The external input unit 205 is for supplying the received information to the screen display controller 203 via the input device such as a keyboard and a mouse. The browser 206 is an ordinary browser (e.g., Internet Explorer). The browser 206 has a window which is displayed on the monitor 30 and which is used to view the web pages.

Operations performed by the program schedule decoder 202 and the screen display controller 203 are described more in detail below. The program schedule decoder 202 decodes the program schedule to extract the tour history data items 12, the charismatic character data items 13, and the screenplay data items 14. The program schedule decoder 202 sends the tour history data items 12 to the screen display controller 203. The screen display controller 203 accesses the web sites described in the tour history 122 via the browser 206 to store the contents of the web pages designated by the tour history 122 into the web page storage 204. The web pages represented by the tour history data items 12 are downloaded. The web page storage 204 is used to store the downloaded web pages. As apparent from the above, a function similar to a so-called "automatic crawling" is achieved to download the web pages independent of the display in the browser. Such separate downloading of the web pages ensures more positive display of the web pages without being affected by the traffic of the network L. However, the previous download is not an essential issue of the present invention. The present invention may be achieved online by means of accessing the web pages represented by the tour history data items 12 according to the browser control sequence.

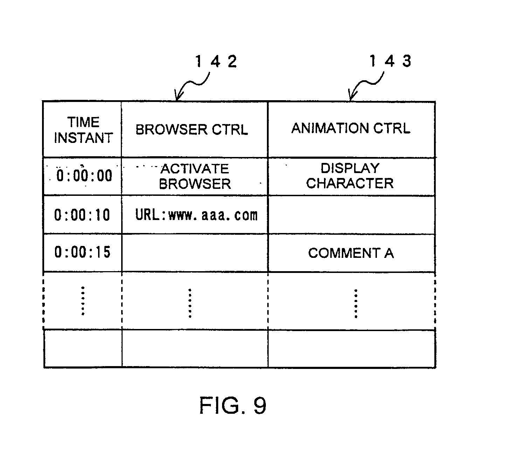

Operations to execute the browser control sequence 142 and the animation control sequence 143 of the screenplay data items 14 are described. These operations are carried out by the program schedule decoder 202. Fig. 9 is a view showing examples of the browser control sequence 142 and the animation control sequence 143. The program schedule decoder 202 executes the browser control sequence 142 of the screenplay data item 14 to send an instruction to the screen display controller 203. For example, the screen display controller 203 runs the browser on the monitor 30 at the time instant "0:00:00" and accesses a web site designated by the URL www.aaa.com at the time instant of "0:00:10", according to the instruction from the program schedule decoder 202. When the web pages in the web site designated by the URL www.aaa.com have already been accessed and the contents thereof stored on the web page storage 204, the screen display controller 203 is directed to load the necessary data out of the web page storage 204. The screen display controller 203 controls the browser 206 in accordance with the browser control sequence to automatically display the web. pages represented by the tour history data Items 12. The program schedule decoder 202 supplies another instruction to the screen display controller 203 to execute the animation control sequence 143 of the screenplay data item 14. For example, the screen display controller 203 produces the character image 32 on the monitor 30 at the time instant 0:00:00 and provides the comments alongside of the current charismatic character at the time instant 0:00:15. The animation control sequence 143 may be used to provide animations with CG animation pictures, movies, audio, and sounds.

The browser control sequence 142 should be synchronized with the animation control sequence 143. This synchronization is achieved by providing a common reference time (not shown) to the screen display controller 203. In other words, the reference time is used to synchronize the time of the browser control sequence 142 with the time of the animation control sequence 143. As shown in Fig. 9, the browser control sequence 142 and the animation control sequence 143 describe events to be generated (access to a web site, display of the character image 32, display of comments, etc.) and the time instant when each event should be generated. The program schedule decoder 202 sends a command to the screen display controller 203 based on the event generation time. The reference time is reset at the beginning of the browser control sequence and the animation control sequence.

If the screen display controller 203 receives an instruction from the external input unit 205 during the exhibition of the on-tour program, the screen display controller 203 stops the execution of the command(s) from the program schedule decoder 202 for a while. The screen display controller 203 executes the instruction from the external input unit 205. For example, the screen display controller 203 may receive an instruction to open a new window of the browser during the live show of the on-tour program with a certain web page displayed in the browser region 31 on the monitor 30 along with the character image 32. In such a case, the stream of the on-tour program is interrupted and the animation of the character image 32 is stopped to open the new window of the browser.

Alternatively, or in addition to the above, a branch freedom (not shown) may be allocated to the screenplay data item 14 in association with the browser control sequence 142 or the animation control sequence 143. The branch freedom as used herein provides information to restrict,or limit interruptions during the execution of the browser control sequence for the live show of the on-tour program. The interruptions include breaking off of the on-tour program by the operation of the user, starting up of another browser program, or opening of a new browser window. The screenplay data item 14 may have several degrees of branch freedom such as a three-degree branch freedom. For example, the user is allowed to perform any and all operations in the first degree of branch freedom. The user is allowed to perform limited operations under certain conditions in the second degree of branch freedom. The user is not allowed to operate the browser(s) in the third degree. Thus, the branch freedom (control of the user operation) may be defined by several degrees in association with the above-mentioned reference time. The program schedule decoder 202 decodes sequentially the degrees of the branch freedom and the screen display controller 203 receives the current degree from the program schedule decoder 202. The program schedule decoder 202 controls the user operation based on the current degree.

### <Practical Applications>

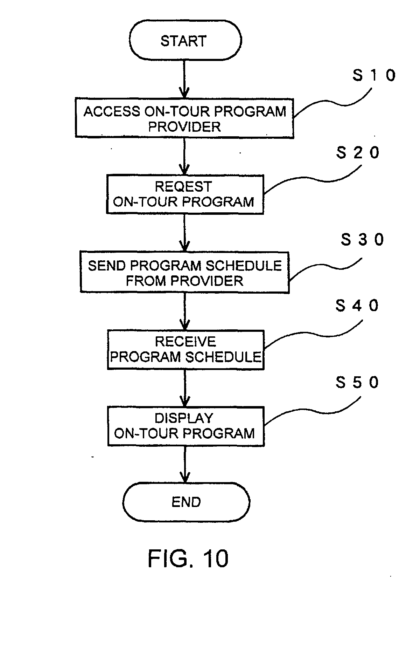

The on-tour program for showing the web sites may be provided in the following manner as described in conjunction with a flow chart shown in Fig. 10. The user at the user terminal 20 accesses the on-tour program provider 10 through the network L (step S10). Upon the access to the on-tour program provider 10, the monitor 30 displays a web page of the on-tour program provider 10 (Fig. 7). The user chooses an item from the display on the monitor 30 with an input device to send a request for a desired on-tour program to the on-tour program provider 10 (step S20). In response to the request for the on-tour program from the user terminal 20, the on-tour program provider 10 supplies the program schedule corresponding to the request to the requesting user terminal 20 (step S30). More specifically, when the user at the user terminal 20 chooses an on-tour program button 61 to send a request, the program schedule managing component 101 retrieves the data items for the program schedule corresponding to the on-tour program button 61 from the components 102 to 105. The program schedule managing component 101 then supplies the data items to the communication controller 106 which in turn supplies the data items to the requesting user terminal 20 via the network L.

Upon reception of the program schedule (step S40), the user terminal 20 decodes the program schedule by the program schedule decoder 202 to extract the tour history data items 12, the charismatic character data items 13, and the screenplay data items 14. These data items are used to display the on-tour program on the monitor 30 (step S50).

As described above, the user can enjoy the desired on-tour program on the monitor 30. The on-tour program allows the user to find the web sites that he or she doesn't know before and get a feel for the charismatic character explaining what the web sites are about. During the exhibition of the on-tour program, the user may be interested in a web site in the program. He or she may want to access the web site independent of the on-tour program. In such a case, the user can run a separate browser (window) to view the web site in question. The user stops the on-tour program for a while. The on-tour program may be restarted after the active browser is terminated or after a certain return command is received. This may be achieved by means of interrupting the on-tour program when the screen display controller 203 runs the separate browser in response to the request from the user received through the external input unit 205 and of restarting the on-tour program after the termination of the separate browser. The user is allowed to access the web site that suits his or her taste separately from the on-tour program. If the screenplay data item 14 has several degrees of branch freedom as described above, the operation of the separate browser may be limited by the degree.

### <Example>

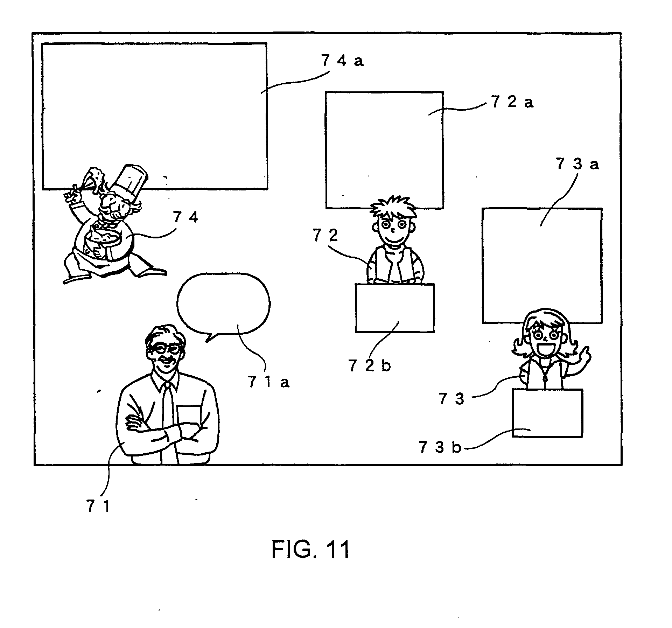

An example of the on-tour program provided as a quiz show with a plurality of charismatic characters is described below. The on-tour program on the monitor 30 is configured as shown in Fig. 11. The charismatic characters are an emcee 71, a contestant 72, a contestant 73 and a quizmaster 74. The emcee 71 is the charismatic character who comperes the on-tour program (quiz show) and announces what is going to happen next. This announcement is made according to the browser control sequence 142 and the animation control sequence 143 of the screenplay data item 14. The comments of the emcee 71 necessary for the announcements are displayed in a balloon region 71a according to the animation control sequence 143.

The contestants 72 and 73 have different profiles and are associated with respective tour history data items 12. The contents of the web sites represented by the tour history data items 12 are displayed in web display regions 72a and 73a. Answers of the contestants 72 and 73 are also displayed in the web display regions 72a and 73a, respectively. The profiles of the contestants 72 and 73 are displayed in profile regions 72b and 73b, respectively. The profiles are generated according to the profile 132 of the charismatic character data item 13. The quizmaster 74 is an expert of quiz questions. The quizmaster asks the questions, shows the answers, and comments on the answers. In Fig. 11, the user can visually find that the quizmaster 74, a chef, is the expert in culinary arts. His questions, answers, and comments are displayed in a region 74a. The quizmaster 74 can ask the questions and comment on the answers while surfing the web sites. The quizmaster 74 has his own tour history 12 to determine the route of the surfing.

In order to create the quiz type on-tour program as described above, the program schedule managing component 101 reads the charismatic character data items 13 for the emcee 71, the contestants 72 and 73 and the quizmaster 74 out of the character data storage component 103, according to the program index data array 15. An expert/specialist is used as the quizmaster 74 depending on the questions. The user can find from the profile 132 of the quizmaster 74 that the quizmaster 74 is an expert/specialist. The questions are prestored items.

The contestants 72 and 73 are the charismatic characters corresponding to the tour histories related to the questions. The number of the contestants is not limited to two. A fascinating and enjoyable service may be achieved by using the charismatic characters having different personalities as the contestant.

The program schedule managing component 101 reads the tour history data items 12 for the contestants 72 and 73 and the quizmaster 74 out of the tour history data storage component 102, according to the program index data array 15. The tour history data items 12 for the contestants 72 and 73 include tour histories of the different order to provide their respective answers. It is not necessary that both tour histories for the contestants 72 and 73 contain the URL of the web site where the correct answer can be found. The tour history data items 12 for the quizmaster 74 correspond to the tour histories that are useful to obtain the answers. For example, when the correct answer can be found in the web page designated by the URL of www.zzz.com, the tour history data item 12 for the quizmaster 74 contains the URL of www.zzz.com.

The program schedule managing component 101 then reads the screenplay data item 14 out of the screenplay data storage component 104, according to the program index data array 15. The screenplay data item 14 may provide, for example, the following scenes. The browser 206 is activated first. The emcee 71 appears and his comments introducing the program are displayed in the balloon region 71a. Then, the contestants 72 and 73 appear. The profiles of the contestants 72 and 73 are displayed in the profile regions 72b and 73b, respectively. The quizmaster 74 follows. The emcee 71 introduces the quizmaster 74 to the viewer and his comments are displayed in the balloon region 71a. Subsequently, a question is displayed in the region 74a. The contestant 72 shows his way of obtaining the answer to the question in the web display region 72a. The way of obtaining the answer is represented by the web pages that the contestant 72 visited. Likewise, the contestant 73 shows her way of obtaining the answer to the question. This is represented by the web pages displayed in the web display region 73a. Then, the answer to the question appears in the region 74a and how to get the correct answer is shown in the same region 74a through the on-tour visiting to the web pages. Some nice things or witty comments of the emcee 71 may be displayed in the balloon region 71a during the interval between the question and the answer.

All comments, the profiles of the contestants 72 and 73, the animation pictures of the emcee 71, the contestants 72 and 73 and the quizmaster 74 are provided by the charismatic character data item 13. The netsurfing on the web sites/pages is performed in the order designated by the tour history data item 12.

The display control for the above-mentioned on-tour program is carried out by the program schedule decoder 202, the screen display controller 203 and the browser 206 in accordance with the tour history data item 12, the charismatic character data item 13,and the screenplay data item 14. The screenplay data item 14 comprises the browser control sequence 142, the animation control sequence 143 and the comments 144. The web browser 206 controls the web display regions 72a, 73a, and 74a. The screen display controller 203 controls the animation pictures of the emcee 71, the contestant 72, the contestant 73, and the quizmaster 74, as well as the balloon region 71a for the emcee 71 and the profile regions 72b and 73b for the contestants 72 and 73.

By providing the above-mentioned scenario, it is possible to provide information about the web sites to the user through the quiz show. The user can enjoy different points of view, different aspects of the thinking process, technical descriptions and/or professional assessments through the quizmaster 74 and the contestants 72 and 73. The user can have an enjoyable surfing experience on the Internet (network L) through the quiz show. As apparent from the above, according to the present invention, it is possible to provide a "Web show" or "Web program" that appeals to users, as a collection of some web pages of the existing web sites arranged in a particular order, and enabling automatic playback of the resulting Web program(s) on a user terminal.

The present invention can be applied to a system for allowing users to have an enjoyable surfing experience on the Internet while getting a feel for the charismatic character who serves as a guide to show the users around his or her favorite or recommended web sites.

While the specific preferred embodiment of the present invention has been illustrated and described, it will be appreciated that various changes can be made therein by the one skilled in the art without departing from the spirit and scope of the present invention.

For example, in the above-mentioned embodiment, the balloons containing the words of the charismatic character give a production of the program for the introduction of the web sites. In other words, the charismatic character "speaks" to show the users around his or her favorite web sites on the screen of the monitor. However, such production is not an essential factor of the present invention. What is important is that the web sites have been chosen according to certain criteria (e.g., the charismatic character) and are introduced to the users with some explanations. Therefore, the present invention also applies to another embodiment in which web pages are displayed on the screen along with brief explanations about them, without using any charismatic character. In such an embodiment, it is unnecessary to store any character image in the on-tour program provider. Alternatively, detailed profiles of a charismatic character may be stored for easier selection of the character by the user. The detailed profiles may be displayed on the screen.

## Claims

1. An information presentation system connected to a user terminal through a network to provide a program schedule to the user terminal, the program schedule representing an on-tour program that introduces a user web sites, comprising:
tour history data storing means on which a tour history data item is stored, the tour history data item representing a web tour history;
screenplay data storing means on which a screenplay data item is stored, the screenplay data item representing timing to access the associated web sites designated by the tour history data item, the type of comments about the web sites, and timing to display the comments about the web sites; and
program schedule managing means adapted to supply to the user terminal the tour history data item and the screenplay data item forming the program schedule, in response to a request from the user terminal.

2. An information presentation system connected to a user terminal through a network to provide a program schedule to the user terminal, the program schedule representing an on-tour program that allows a user to access web sites during which a character explains about the web sites to the user, comprising:
tour history data storing means on which a tour history data item is stored, the tour history data item representing a web tour history;
character data storing means on which a character data item is stored, the character data item including an image of the character;
screenplay data storing means on which a screenplay data item is stored, the screenplay data item representing timing to access the associated web sites designated by the tour history data item, timing to display the image of the character, the type of comments of the character, and timing to display the comments of the character; and
program schedule managing means adapted to supply to the user terminal the tour history data item, the character data item, and the screenplay data item forming the program schedule, in response to a request from the user terminal.

3. An information presentation system as claimed in claim 2, further comprising index data storage means on which program index data are stored, wherein said program schedule managing means supplies the program index data to the user terminal in response to a request from the user terminal.

4. An information processing system comprising:
a communication controller adapted to receive a program schedule through a network, the program schedule having a tour history data item and a screenplay data item, the tour history data item representing a web tour history, the screenplay data item representing timing to access the associated web sites designated by the tour history data item, the type of comments about the web sites, and timing to display the comments about the web sites;
program schedule decoder for decoding the program schedule received by said communication controller; and
screen display controlling means for controlling the web browser to achieve automatic access to the web sites in accordance with the tour history data item and the screenplay data item, and controlling to display in chronological order the display window of the web browser and the comments about the web sites displayed by the web browser on a display device.

5. An information processing system comprising:
a communication controller adapted to receive a program schedule through a network, the program schedule having a tour history data item representing a web tour history, a character data item including an image of the character, and a screenplay data item representing timing to access the associated web sites designated by the tour history data item, timing to display the image of the character, the type of comments of the character, and timing to display the comments of the character;
program schedule decoder for decoding the program schedule received by said communication controller; and
screen display controlling means for controlling the web browser to achieve automatic access to the web sites in accordance with the tour history data item and the screenplay data item, and displaying in chronological order the display window of the web browser, the image of the character, and the comments of the character about the web sites displayed by the web browser on a display device.

6. An information processing system as claimed in claim 5, further comprising web site storing means, wherein said program schedule decoder accesses beforehand all web sites designated by the tour history data item and stores the information about the web sites on said web site storing means.

7. A method for providing information to a user terminal connected via a network, the information provided being a program schedule representing an on-tour program introducing web sites, comprising the steps of:
supplying a program schedule to the user terminal, the program schedule having a tour history data item and a screenplay data item, the tour history data item representing a web tour history, the screenplay data item representing timing to access the associated web sites designated by the tour history data item, the type of comments about the web sites, and timing to display the comments about the web sites;
in the user terminal, decoding the program schedule;
controlling a web browser to achieve automatic access to the web sites in accordance with the tour history data item and the screenplay data item, and controlling the user terminal to display in chronological order the display window of the web browser and the comments about the web sites displayed by the web browser.

8. A method for providing information to a user terminal connected via a network, the information provided being a program schedule representing an on-tour program that allows a user to access web sites during which a character explains about the web sites to the user, comprising the steps of:
supplying a program schedule to the user terminal, the program schedule having a tour history data item representing a web tour history, a character data item including an image of the character, and a screenplay data item representing timing to access the associated web sites designated by the tour history data item, timing to display the image of the character, the type of comments of the character, and timing to display the comments of the character;
in the user terminal, decoding the program schedule;
controlling a web browser to achieve automatic access to the web sites in accordance with the tour history data item and the screenplay data item, and controlling the user terminal to display in chronological order the display window of the web browser, the image of the character, and the comments of the character about the web sites displayed by the web browser.

9. A method carried out in a system that provides a user with an on-tour program as a program schedule, the on-tour program allowing the user to access web sites during which the web sites are introduced to the user, the program schedule having a tour history data item and a screenplay data item, the tour history data item representing a web tour history, the screenplay data item representing timing to access the associated web sites designated by the tour history data item, the type of comments about the web sites, and timing to display the comments about the web sites, comprising the steps of:
receiving the program schedule through the network;
decoding the program schedule;
controlling a web browser to achieve automatic access to the web sites in accordance with the tour history data item and the screenplay data item; and
displaying in chronological order the display window of the web browser and the comments about the web sites displayed by the web browser.

10. A method carried out in a system that provides a user with an on-tour program as a program schedule, the on-tour program allowing the user to access web sites during which a character explains about the web sites to the user, the program schedule having a tour history data item representing a web tour history, a character data item including an image of the character, and a screenplay data item representing timing to access the associated web sites designated by the tour history data item, timing to display the image of the character, the type of comments of the character, and timing to display the comments of the character, comprising the steps of:
receiving the program schedule through the network;
decoding the program schedule;
controlling a web browser to achieve automatic access to the web sites in accordance with the tour history data item and the screenplay data item; and
displaying on a display device in chronological order the display window of the web browser, the image of the character, and the comments of the character about the web sites displayed by the web browser.

11. A computer program for use in making a computer carry out jobs, the computer is connected to a user terminal via a network, the computer being function to provide a program schedule to the user terminal, the program schedule representing an on-tour program introducing web sites, the computer program being for use in making the computer carry out the steps of:
sending collectively a tour history data item and a screenplay data item as the program schedule, the tour history data item representing a web tour history, the screenplay data item representing timing to access the associated web sites designated by the tour history data item, the type of comments about the web sites, and timing to display the comments about the web sites; and
directing the user terminal to decode the program schedule, to control a web browser to achieve automatic access to the web sites in accordance with the tour history data item and the screenplay data item and to display on a display device in chronological order the display window of the web browser and the comments about the web sites displayed by the web browser.

12. A computer program for use in making a computer carry out jobs, the computer is connected to a user terminal via a network, the computer being function to provide a program schedule to the user terminal, the program schedule representing an on-tour program that allows the user to access web sites during which a character explains about the web sites to the user, the computer program being for use in making the computer carry out the steps of:
sending collectively, as the program schedule, a tour history data item representing a web tour history, a character data item including an image of the character, and a screenplay data item representing timing to access the associated web sites designated by the tour history data item, timing to display the image of the character, the type of comments of the character, and timing to display the comments of the character; and
directing the user terminal to decode the program schedule, to control a web browser to achieve automatic access to the web sites in accordance with the tour history data item and the screenplay data item and to display on a display device in chronological order the display window of the web browser, the image of the character, and the comments of the character about the web sites displayed by the web browser.

13. A computer program for use in making a computer carry out jobs, the computer being function to provide a user with an on-tour program as a program schedule, the on-tour program introducing web sites, the program schedule having a tour history data item and a screenplay data item, the tour history data item representing a web tour history, the screenplay data item representing timing to access the associated web sites designated by the tour history data item, the type of comments about the web sites, and timing to display the comments about the web sites, the computer program being for use in making the computer carry out the steps of:
receiving the program schedule via the network;
decoding the program schedule;
controlling the web browser to achieve automatic access to the web sites in accordance with the tour history data item and the screenplay data item; and
displaying on a display device in chronological order the display window of the web browser and the comments about the web sites displayed by the web browser.

14. A computer program for use in making a computer carry out jobs, the computer being function to provide a user with an on-tour program as a program schedule, the on-tour program allowing the user to access web sites during which a character explains about the web sites to the user, the program schedule having a tour history data item representing a web tour history, a character data item including an image of the character, and a screenplay data item representing timing to access the associated web sites designated by the tour history data item, timing to display the image of the character, the type of comments of the character, and timing to display the comments of the character, the computer program being for use in making the computer carry out the steps of:
receiving the program schedule through the network;
decoding the program schedule;
controlling the web browser to achieve automatic access to the web sites in accordance with the tour history data item and the screenplay data item; and
displaying on a display device in chronological order the display window of the web browser, the image of the character, and the comments of the character about the web sites displayed by the web browser.

15. A computer-readable data storage having the computer program claimed in claim 11 to 14 stored thereon.
